# EUROPEAN PATENT APPLICATION

(11) **EP 2 207 352 A1**
(43) Date of publication of application: **14.07.2010**
(21) Application number: 08853028.2
(22) Date of filing: 14.10.2008
(51) Int. Cl.: H04N 7/24, H04N 13/00

(54) **A VIDEO ENCODING/DECODING METHOD AND A VIDEO ENCODER/DECODER**

(30) Priority: 24.10.2007 CN 200710176288
(71) Applicant: Huawei Device Co., Ltd., Longgang District Shenzhen Guangdong 518129 (CN)
(72) Inventor: FANG, Ping, Shenzhen Guangdong 518129 (CN)
(74) Representative: Epping - Hermann - Fischer
(86) International application number: PCT/CN2008/072675
(87) International publication number: WO 2009/065325

(57) **Abstract**

A video coding method, a video decoding method, a video coder, and a video decoder are disclosed herein. A video coding method includes: performing base-layer coding for the first view, and extracting prediction information of at least one layer by combining a locally decoded first view and a second view; performing enhancement-layer coding for prediction information of at least one layer respectively; and multiplexing the enhancement-layer codes and the base-layer codes of the first view to obtain encoded information. Through the embodiments of the present invention, the contents of the 3D video are encoded hierarchically, and various 3D display devices connected in different networks can display the 3D video hierarchically.

## Description

### FIELD OF THE INVENTION

The present invention relates to video processing technologies, and in particular, to a video coding method, a video decoding method, a video coder, and a video decoder.

### BACKGROUND

The traditional two-dimensional (2D) video is a carrier of planar information. It renders contents of a scene, but cannot render the depth information of the scene. When looking around, people need not only see the width and height of objects, but also perceive the depth of the objects and figure out the distance between objects or the distance between the observer and the object. Such a three-dimensional (3D) feature is generated in this way: When people watch an object at a distance with both eyes, the two eyes receive different images due to spacing between the left eye and the right eye. The two images are combined to generate a stereoscopic sense in the human brain. With the development of video technologies, people are no longer satisfied with the 2D video, but pursue better user experience and the on-the-spot feeling. The 3D video technology is one of the key technologies for achieving that goal.

Based on the principle of disparity between both eyes of a person, the 3D video technology uses a camera to obtain two images from different perspectives of the same scene, display the two images on the screen simultaneously or sequentially, and let both eyes watch the two images to obtain the stereoscopic sense. Compared with the traditional 2D video, the 3D video has two video streams. For ensuring the image resolution without allowing for the compression coding, the data traffic of a 3D video for transmission is double of the data traffic of a 2D view. The increase of the data traffic brings challenges to storage and transmission, and the problem is not solved by only increasing the storage capacity and the network bandwidth. Efficient coding methods need to be designed to compress the 3D video data.

Currently, 3D display devices of various specifications are available on the market, for example, helmet display, stereoscopic eye-glasses, holographic display device, and various automatic 3D displays of different resolutions. Different 3D displays require different layers of the 3D video contents, and the networks connected with the 3D displays have different bandwidths. Consequently, different layers of 3D video contents are required when the same 3D display is connected in different networks. For example, the 3D display device on a high-speed network may require rich 3D information according to its resolution capabilities, and display high-quality 3D videos. In some circumstances, the 3D display requires only simple 3D information due to limitation of its own conditions or the network bandwidth, and displays the videos of a simple stereoscopic sense. Some displays like a traditional 2D display even require no 3D information because they need only to display 2D views. The status quo of coexistence of different display devices and different network transmission capabilities requires a 3D video coding and decoding method to enable different layers of 3D display by various 3D display devices connected in different networks.

In the process of implementing the present invention, the inventor finds at least the following defects in the prior art: The existing 3D video coding and decoding method accomplishes only separate coding of 2D display and 3D display, namely, uses one of the views in the two-eye video as a reference view, uses the standard coding mode for encoding the reference view, and encodes the other view against the reference view. In this way, the reference view decoded on the display side can be displayed in a 2D mode, and all contents decoded on the display side can be displayed in a 3D mode, but it is impossible to let various 3D display devices connected in different networks give different quality of 3D display.

### SUMMARY

The embodiments of the present invention provide a video coding method, a video decoding method, a video coder, and a video decoder to accomplish hierarchical coding for 3D views, and therefore, various 3D display devices connected in different networks can display the 3D views hierarchically.

A video coding method provided in an embodiment of the present invention includes:
using a first view as a reference view and performing base-layer coding for the first view, and extracting prediction information of at least one layer by combining a locally decoded first view and a second view;
performing enhancement-layer coding for the prediction information of at least one layer respectively; and
multiplexing the enhancement-layer codes and the base-layer codes of the first view to obtain encoded information.

A video coder provided in an embodiment of the present invention includes:
a base layer coding module, adapted to use a first view as a reference view and perform base-layer coding for the first view;
at least one prediction information extracting module, adapted to extract prediction information of at least one layer by combining a locally decoded first view and a second view;
an enhancement layer coding module, adapted to perform enhancement-layer coding for the prediction information of at least one layer; and
a multiplexing module, adapted to multiplex the enhancement-layer codes and the base-layer codes of the first view to obtain encoded information.

A video decoding method provided in an embodiment of the present invention includes:
demultiplexing received encoded information to obtain the base-layer codes and the enhancement-layer codes;
decoding the base-layer codes to obtain a first view as a reference view;
decoding the enhancement-layer codes to obtain prediction information of at least one layer; and
predicting a second view according to the prediction information of at least one layer and the first view.

A video decoder provided in an embodiment of the present invention includes:
a demultiplexing module, adapted to demultiplex received encoded information to obtain the base-layer codes and the enhancement-layer codes;
a base layer decoding module, adapted to decode the base-layer codes to obtain a first view as a reference view;
an enhancement layer decoding module, adapted to decode the enhancement-layer codes to obtain prediction information of at least one layer; and
a predicting module, adapted to predict a second view according to the prediction information of at least one layer and the first view.

A video coding method provided in an embodiment of the present invention includes:
using a first view as a reference view and performing base-layer coding for the first view, and extracting prediction information of a first layer by combining a locally decoded first view and a second view;
performing enhancement-layer coding for prediction information of the first layer; and
extracting prediction information increment of the current layer in the following way, which begins with extraction of prediction information increment of the second layer:
extracting prediction information increment of the current layer by combining the locally decoded first view and a second view and the previous layer of prediction information, and performing enhancement-layer coding for prediction information of the current layer, which goes on until prediction information increment of the last layer undergoes enhancement-layer coding; and
multiplexing the base-layer codes and the enhancement-layer codes to obtain encoded information.

A video coder provided in an embodiment of the present invention includes:
a base layer coding module, adapted to use a first view as a reference view and perform base-layer coding for the first view;
prediction information of at least two layers extracting modules, where: prediction information of the first layer extracting module is connected with the base layer coding module and adapted to extract prediction information of the first layer by combining the locally decoded first view and a second view; other layers of prediction information extracting modules except prediction information of the first layer extracting module are connected with the previous layer of prediction information extracting module and adapted to extract prediction information increment of the current layer by combining the locally decoded first view, the second view, and the previous layer of prediction information;
an enhancement layer coding module, adapted to perform enhancement-layer coding for prediction information of the first layer and prediction information increments of several layers; and
a multiplexing module, adapted to multiplex the base-layer codes and the enhancement-layer codes to obtain encoded information.

A video decoding method provided in an embodiment of the present invention includes:
demultiplexing received encoded information to obtain the base-layer codes and the enhancement-layer codes;
decoding the base-layer codes to obtain a first view as a reference view;
decoding the enhancement-layer codes to obtain prediction information of a first layer and prediction information increments of several layers;
calculating prediction information of at least two layers according to prediction information of the first layer and the prediction information increments of several layers; and
predicting a second view according to prediction information of the at least two layers and the first view.

A video decoder provided in an embodiment of the present invention includes:
a demultiplexing module, adapted to demultiplex received encoded information to obtain the base-layer codes and the enhancement-layer codes;
a base layer decoding module, adapted to decode the base-layer codes to obtain a first view as a reference view;
an enhancement layer decoding module, adapted to decode the enhancement-layer codes to obtain prediction information of a first layer and prediction information increments of several layers;
a calculating module, adapted to calculate prediction information of at least two layers according to prediction information of the first layer and the prediction information increments of several layers; and
a predicting module, adapted to predict a second view according to the prediction information of at least two layers and the first view.

Through the video coding method, the video decoding method, the video coder, and the video decoder in the embodiments of the present invention, prediction information of at least one layer is extracted and undergoes enhancement-layer coding respectively. Therefore, the 3D views are encoded hierarchically, and various 3D display devices connected in different networks can display the 3D views hierarchically.

### BRIEF DESCRIPTION OF THE DRAWINGS

FIG. 1 is a flowchart of a video coding method according to a first embodiment of the present invention;
FIG. 2 is a flowchart of a video coding method according to a second embodiment of the present invention;
FIG. 3 is a flowchart of a video coding method according to a third embodiment of the present invention;
FIG. 4 is a flowchart of a video coding method according to a fourth embodiment of the present invention;
FIG. 5 shows a structure of a video coder according to a first embodiment of the present invention;
FIG. 6 shows a structure of a video coder according to a second embodiment of the present invention;
FIG. 7 is a flowchart of a video decoding method according to a first embodiment of the present invention;
FIG. 8 is a flowchart of a video decoding method according to a second embodiment of the present invention;
FIG. 9 is a flowchart of a video decoding method according to a third embodiment of the present invention;
FIG. 10 is a flowchart of a video decoding method according to a fourth embodiment of the present invention;
FIG. 11 shows a structure of a video decoder according to a first embodiment of the present invention;
FIG. 12 is a flowchart of another video coding method according to a first embodiment of the present invention;
FIG. 13 is a flowchart of another video coding method according to a second embodiment of the present invention;
FIG. 14 is a flowchart of another video coding method according to a third embodiment of the present invention;
FIG. 15 is a flowchart of another video coding method according to a fourth embodiment of the present invention;
FIG. 16 shows a structure of another video coder according to a first embodiment of the present invention;
FIG. 17 shows a structure of another video coder according to a second embodiment of the present invention;
FIG. 18 is a flowchart of another video decoding method according to a first embodiment of the present invention;
FIG. 19 is a flowchart of another video decoding method according to a second embodiment of the present invention;
FIG. 20 is a flowchart of another video decoding method according to a third embodiment of the present invention;
FIG. 21 is a flowchart of another video decoding method according to a fourth embodiment of the present invention; and
FIG. 22 shows a structure of another video decoder according to a first embodiment of the present invention.

### DETAILED DESCRIPTION OF THE EMBODIMENTS

The technical solution under the present invention is described below in detail with reference to accompanying drawings and some exemplary embodiments.

The first embodiment of a video coding method is described below:

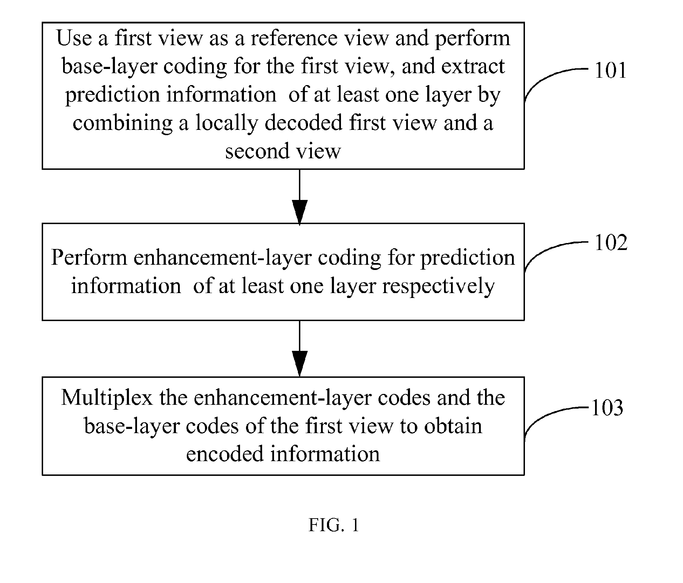

FIG. 1 is a flowchart of a video coding method according to a first embodiment of the present invention. The method includes the following steps:
   Step 101: Use the first view as a reference view and perform base-layer coding for the first view, and extract prediction information of at least one layer by combining the locally decoded first view and a second view. The first view and the second view may be a left-eye view and a right-eye view respectively, and the prediction information may be motion vector information and/or depth or disparity information.
   Step 102: Perform enhancement-layer coding for prediction information of at least one layer respectively.
   Step 103: Multiplex the enhancement-layer codes and the base-layer codes of the first view to obtain encoded information.

In this embodiment, prediction information of at least one layer is extracted and undergoes enhancement-layer coding respectively. Therefore, the 3D views are encoded hierarchically, and various 3D display devices connected in different networks can display the 3D views hierarchically.

The second embodiment of a video coding method is described below:

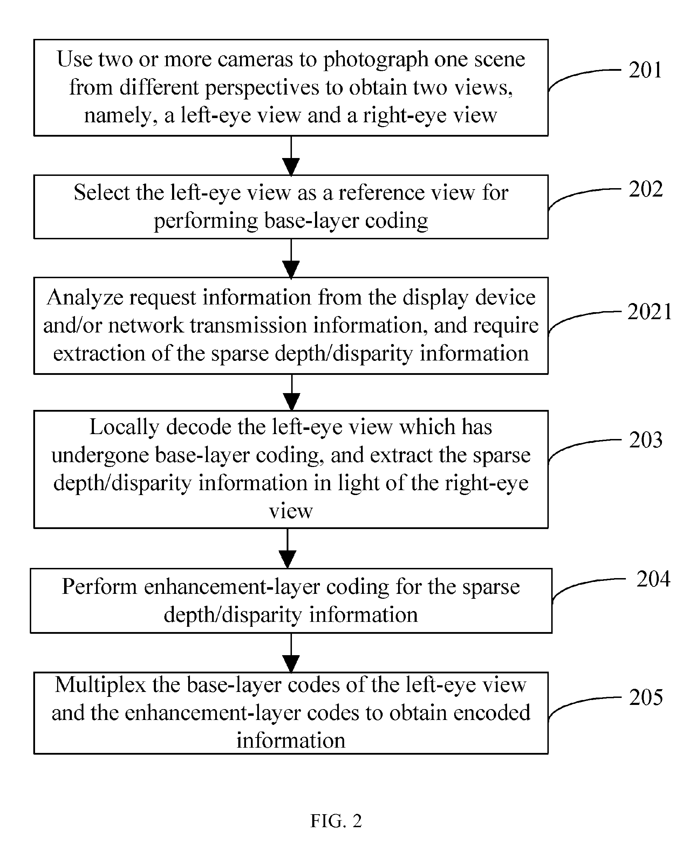

FIG. 2 is a flowchart of a video coding method according to a second embodiment of the present invention. In this embodiment, depth/disparity information is used as prediction information to extract one layer of depth/disparity information, and it is assumed that the information to be extracted is sparse depth/disparity information. This embodiment includes the following steps:
   Step 201: Photograph one scene using two or more cameras from different perspectives to obtain two views, namely, a left-eye view and a right-eye view.
   Step 202: Select either the left-eye view or the right-eye view as a reference view, and perform base-layer coding for the reference view. In this embodiment, it is assumed that the left-eye view is selected as a reference view.
   Step 203: Locally decode the left-eye view which has undergone base-layer coding, and extract sparse depth/disparity information in light of the right-eye view. The sparse depth/disparity information corresponds to a pre-obtained 3D view display level.
   Step 204: Perform enhancement-layer coding for the sparse depth/disparity information.
   Step 205: Multiplex the base-layer codes of the left-eye view and the enhancement-layer codes to obtain encoded information.

In step 203, the pre-obtained 3D view display level may be determined according to the preset number of layers and the level of the depth/disparity information to be extracted, or may be determined in the following step added before step 203:
Step 2021: Analyze the request information and/or network transmission information of the display device. If the analysis result indicates that few contents can be transmitted when the network is relatively congested, the required display level of the 3D view is low, and the sparse depth/disparity information may be extracted.

In this embodiment, the prediction information may be motion vector information, or combination of the depth/disparity information and the motion vector information; the base-layer codes and the enhancement-layer codes may be discrete cosine transformation codes with motion compensation. If the pre-obtained 3D view display level is high, prediction information of a layer in this embodiment may be dense prediction information or fine prediction information.

In this embodiment, a layer of sparse depth/disparity information is extracted and undergoes enhancement-layer coding. Therefore, the 3D views are encoded hierarchically, and various 3D display devices connected in different networks can display the 3D views hierarchically. Besides, a proper layer of depth/disparity information may be extracted according to the conditions of the display device and the network, thus improving the coding efficiency, reducing the coding complexity, and further improving the network transmission efficiency. This embodiment multiplexes the base-layer codes, and is compatible with the 2D display function because 2D views can be displayed according to the base-layer codes.

The third embodiment of a video coding method is described below:

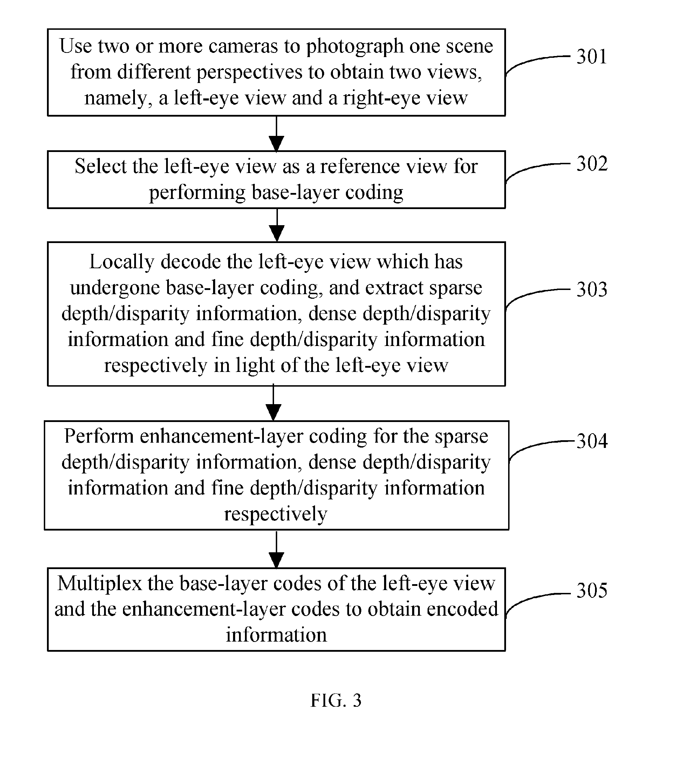

FIG. 3 is a flowchart of a video coding method according to a third embodiment of the present invention. This embodiment uses the depth/disparity information as prediction information. Before the steps in FIG. 1 are performed, the number of layers and the level of the depth/disparity information to be extracted may be preset. In this embodiment, it is assumed that depth/disparity information of three layers needs to be extracted: sparse depth/disparity information, dense depth/disparity information, and fine depth/disparity information. The technical solution in this embodiment is detailed below. The video coding method in this embodiment includes the following steps:
   Step 301: Photograph one scene using two or more cameras from different perspectives to obtain two views, namely, a left-eye view and a right-eye view.
   Step 302: Select either the left-eye view or the right-eye view as a reference view, and perform base-layer coding for the reference view. In this embodiment, it is assumed that the left-eye view is selected as a reference view.
   Step 303: Locally decode the left-eye view which has undergone base-layer coding, and extract sparse depth/disparity information, dense depth/disparity information, and fine depth/disparity information respectively in light of the right-eye view.
   Step 304: Perform enhancement-layer coding for the sparse depth/disparity information, dense depth/disparity information, and fine depth/disparity information respectively.
   Step 305: Multiplex the base-layer codes of the left-eye view and the enhancement-layer codes to obtain encoded information.

In the video coding method in this embodiment, the prediction information may be motion vector information, or combination of the depth/disparity information and the motion vector information; the base-layer codes and the enhancement-layer codes may be discrete cosine transformation codes with motion compensation.

Through the video coding method in this embodiment, depth/disparity information of at least one layer is extracted and undergoes enhancement-layer coding respectively. Therefore, the 3D views are encoded hierarchically, and various 3D display devices connected in different networks can display the 3D views hierarchically. This embodiment also multiplexes the base-layer codes, and is compatible with the 2D display function because the 2D views can be displayed according to the base-layer codes.

The fourth embodiment of a video coding method is described below:

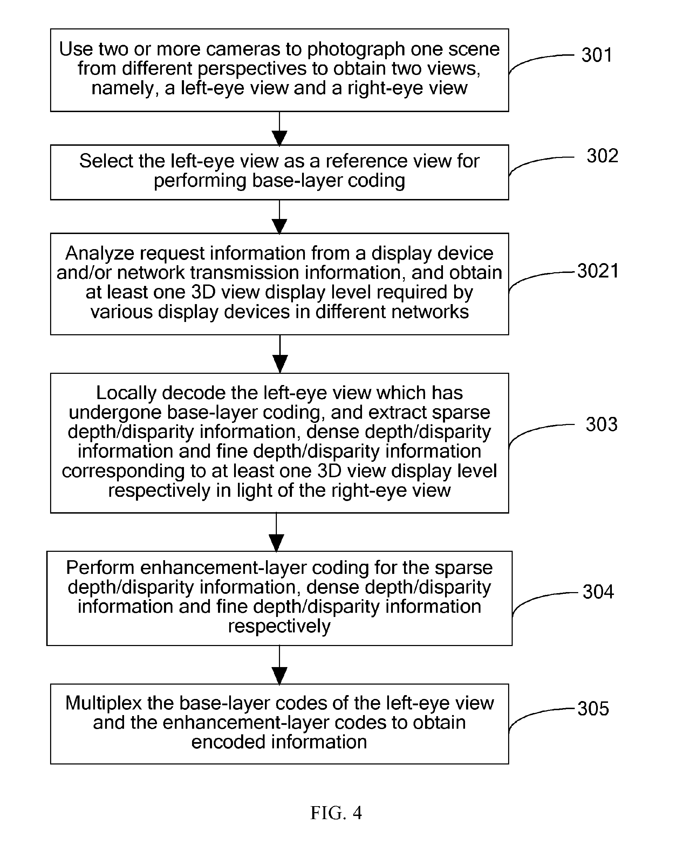

FIG. 4 is a flowchart of a video coding method according to a fourth embodiment of the present invention. This embodiment differs from the third embodiment in that: It is not necessary to preset the number of layers and the level of the extracted depth/disparity information before step 301, but the following step is added before step 303:
   Step 3021: Analyze the request information and/or network transmission information of the display device. If the analysis result indicates that the display device has a relatively high resolution, the required layer of displaying the 3D view is relatively high, and the fine depth/disparity information needs to be extracted; if the analysis result indicates that few contents can be transmitted when the network is relatively congested, the required layer of displaying the 3D view is relatively low, and the sparse depth/disparity information needs to be extracted. Taking such two factors into consideration, at least one 3D view display level required by various display devices in different networks is obtained.

Specifically, step 303 is: locally decoding the left-eye view which has undergone base-layer coding, and extracting depth/disparity information of at least one layer corresponding to the 3D view display level required by the display device and/or the network in light of the right-eye view.

On the basis of the above third embodiment, this embodiment further extracts the corresponding level of depth/disparity information according to the requirements of the display device and the network conditions, thus improving the coding efficiency, reducing the coding complexity, and improving the network transmission efficiency.

The first embodiment of a video coder is described below:

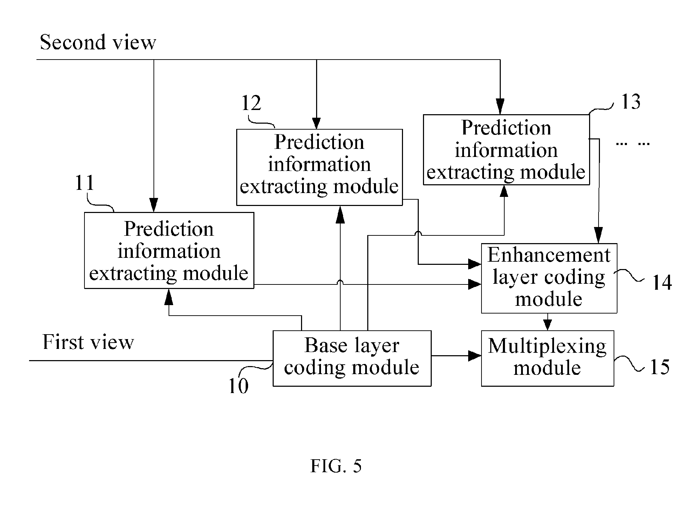

FIG. 5 shows a structure of a video coder according to a first embodiment of the present invention. The video coder includes:
   a base layer coding module 10, adapted to use a first view as a reference view and perform base-layer coding for the first view;
   at least one prediction information extracting module, for example, prediction information extracting module 11, 12, 13... in FIG. 5, adapted to extract prediction information of at least one layer by combining a locally decoded first view and a second view;
   an enhancement layer coding module 14, adapted to perform enhancement-layer coding for prediction information of at least one layer respectively; and
   a multiplexing module 15, adapted to multiplex the enhancement-layer codes and the base-layer codes of the first view to obtain encoded information.

The coder provided in this embodiment is applicable to embodiments 1-4 of a video coding method provided herein.

In this embodiment, at least one prediction information extracting module extracts prediction information of at least one layer and performs enhancement-layer coding for them respectively. Therefore, the 3D views are encoded hierarchically, and various 3D display devices connected in different networks can display the 3D views hierarchically.

The second embodiment of a video coder is described below:

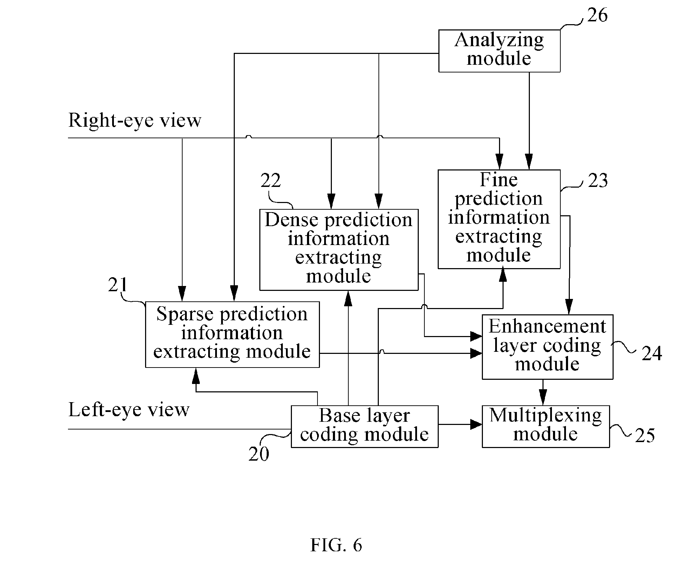

FIG. 6 shows a structure of a video coder according to a second embodiment of the present invention. The video coder includes:
   a base layer coding module 20, adapted to use a left-eye view as a reference view and perform base-layer coding for the left-eye view, or use a right-eye view as a reference view and perform base-layer coding for the right-eye view;
   a sparse prediction information extracting module 21, adapted to extract sparse prediction information by combining the right-eye view and the locally decoded left-eye view;
   a dense prediction information extracting module 22, adapted to extract dense prediction information by combining the right-eye view and the locally decoded left-eye view;
   a fine prediction information extracting module 23, adapted to extract fine prediction information by combining the right-eye view and the locally decoded left-eye view;
   an enhancement layer coding module 24, adapted to perform enhancement-layer coding for the sparse prediction information, dense prediction information, and fine prediction information respectively; and
   a multiplexing module 25, adapted to multiplex the base-layer codes of the left-eye view and the enhancement-layer codes to obtain encoded information.

The video coder in this embodiment may further include an analyzing module 26, which is adapted to analyze the request information from the display device and/or the network transmission information, and obtain at least one 3D view display level required by the display device and/or the network.

The video coder in this embodiment is not limited to the foregoing prediction information of three layers extracting modules. Depending on the actual needs, for example, as required by the display device and/or the network, at least one prediction information extracting module is set to meet the requirements of different display devices and/or networks.

In this embodiment, a sparse prediction information extracting module 21, a dense prediction information extracting module 22, and a fine prediction information extracting module 23 are set to extract prediction information of three layers, and the prediction information of three layers undergo enhancement-layer coding respectively. Therefore, the 3D views are encoded hierarchically, and various 3D display devices connected in different networks can display the 3D views hierarchically. In addition, the specific requirements of the display device and the network conditions may be obtained according to the analyzing module 26, and the corresponding level of prediction information is extracted, thus improving the coding efficiency, reducing the coding complexity, and further improving the network transmission efficiency.

The first embodiment of a video decoding method is described below:

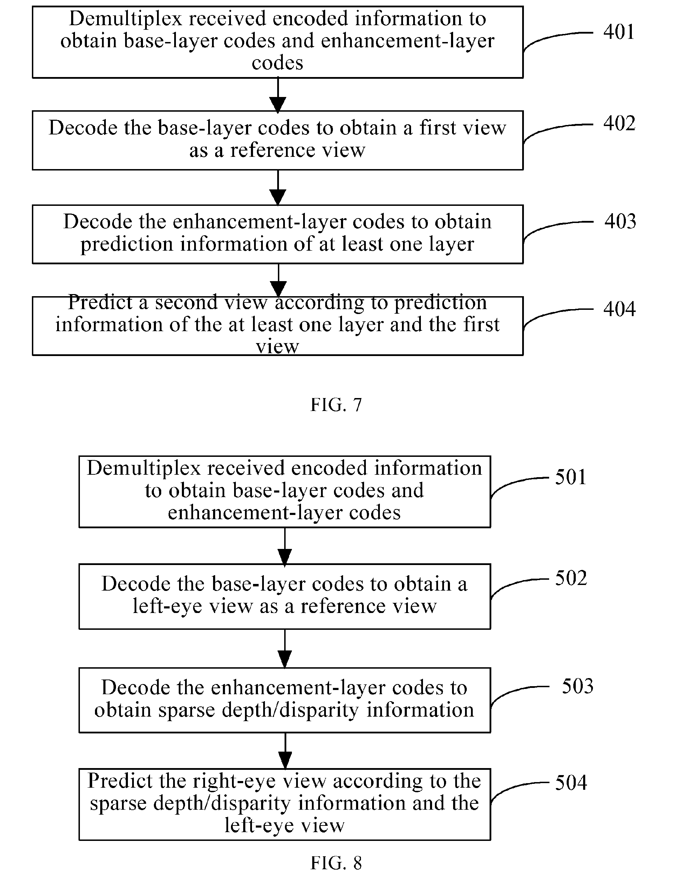

FIG. 7 is a flowchart of a video decoding method according to a first embodiment of the present invention. The video decoding method in this embodiment is pertinent to the video coding method in the first embodiment of the present invention, and includes the following steps:
   Step 401: Demultiplex received encoded information to obtain the base-layer codes and the enhancement-layer codes.
   Step 402: Decode the base-layer codes to obtain a first view as a reference view.
   Step 403: Decode the enhancement-layer codes to obtain at least prediction information of one layer.
   Step 404: Predict a second view according to prediction information of the at least one layer and the first view.

The first view and the second view may be a left-eye view and a right-eye view respectively, and the prediction information may be motion vector information and/or depth or disparity information.

In this embodiment, prediction information of at least one layer is obtained, and thus 3D views are decoded hierarchically. Besides, the second view is predicted in light of the first view, and the 3D views may be displayed according to the first view and the predicted second view. Therefore, various 3D display devices can display the 3D views hierarchically.

The second embodiment of a video decoding method is described below:
FIG. 8 is a flowchart of a video decoding method according to a second embodiment of the present invention. The video decoding method in this embodiment is pertinent to the video coding method in the second embodiment of the present invention, and includes the following steps:
   Step 501: Demultiplex received encoded information to obtain the base-layer codes and the enhancement-layer codes.
   Step 502: Decode the base-layer codes to obtain a left-eye view as a reference view.
   Step 503: Decode the enhancement-layer codes to obtain sparse depth/disparity information.
   Step 504: Predict the right-eye view according to the sparse depth/disparity information and the left-eye view.

In this embodiment, the sparse depth/disparity information is obtained, and the sparse depth/disparity information corresponds to a 3D view display level pre-obtained at the time of coding. Thus, the 3D views are decoded hierarchically. Besides, the second view is predicted in light of the first view, and the 3D views may be displayed according to the first view and the predicted second view. Therefore, various 3D display devices can display the 3D views hierarchically.

The third embodiment of a video decoding method is described below:

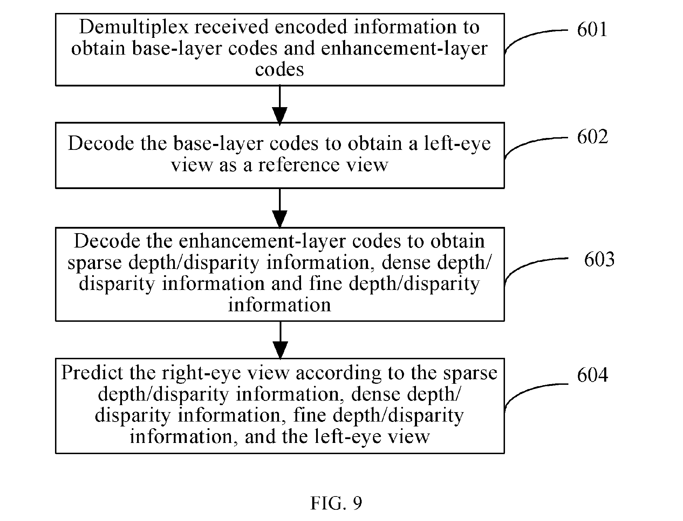

FIG. 9 is a flowchart of a video decoding method according to a third embodiment of the present invention. The video decoding method in this embodiment is pertinent to the video coding method in the fourth embodiment of the present invention, and includes the following steps:
   Step 601: Demultiplex received encoded information to obtain the base-layer codes and the enhancement-layer codes.
   Step 602: Decode the base-layer codes to obtain a left-eye view as a reference view.
   Step 603: Decode the enhancement-layer codes to obtain sparse depth/disparity information, dense depth/disparity information, and fine depth/disparity information.
   Step 604: Predict the right-eye view according to the sparse depth/disparity information, dense depth/disparity information, fine depth/disparity information, and the left-eye view.

In the coding process, at least one 3D view display level is obtained by analyzing the display device and/or network transmission information, and a three-layer prediction information structure corresponding to the display level is obtained according to the display level, where the prediction information of three layers are sparse depth/disparity information, dense depth/disparity information, and fine depth/disparity information. Therefore, in the decoding process, the enhancement-layer codes are decoded directly to obtain the depth/disparity information of three layers.

In the video decoding method in this embodiment, the prediction information may be motion vector information, or combination of the depth/disparity information and the motion vector information.

In the video decoding method in this embodiment, depth/disparity information of at least one layer is obtained, and then the 3D views are decoded hierarchically. Besides, the right-eye view is predicted in light of the left-eye view, and thus the 3D views may be displayed according to the left-eye view and the predicted right-eye view. Therefore, various 3D display devices can display the 3D views hierarchically. In addition, the video decoding method in this embodiment decodes the base-layer codes, and is compatible with the 2D display function because the 2D views can be displayed according to the decoded information of the base-layer codes.

The fourth embodiment of a video decoding method is described below:

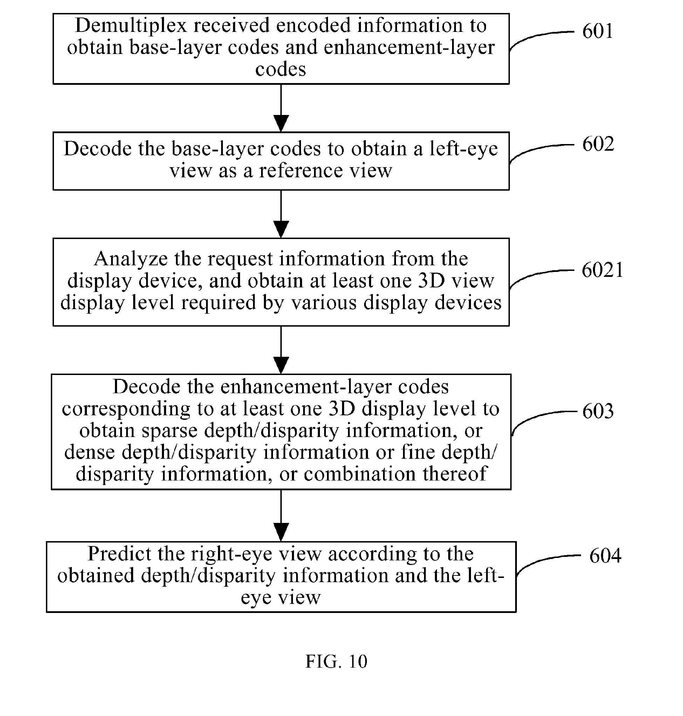

FIG. 10 is a flowchart of a video decoding method according to a fourth embodiment of the present invention. The video decoding method in this embodiment is pertinent to the video coding method in the third embodiment of the present invention, and differs from the third embodiment of the decoding method in the following aspects:
   In the coding process, the three-layer prediction information structure is determined according to the preset number of layers and the level of the prediction information to be extracted. Accordingly, the decoding process may further include the following step before step 603:
   Step 6021: Analyze the request information from the display device, and obtain at least one 3D view display level required by various display devices.

Specifically, step 603 is: decoding the enhancement-layer codes corresponding to the at least one 3D view display level, and obtaining depth/disparity information of at least one layer, which may be sparse depth/disparity information, or dense depth/disparity information, or fine depth/disparity information, or any combination thereof.

On the basis of the third embodiment of the decoding method, this embodiment further decodes the corresponding level of enhancement-layer codes according to the specific requirements of the display device, and obtains the corresponding level of depth/disparity information, thus improving the decoding efficiency and reducing the decoding complexity.

The first embodiment of a video decoder is described below:

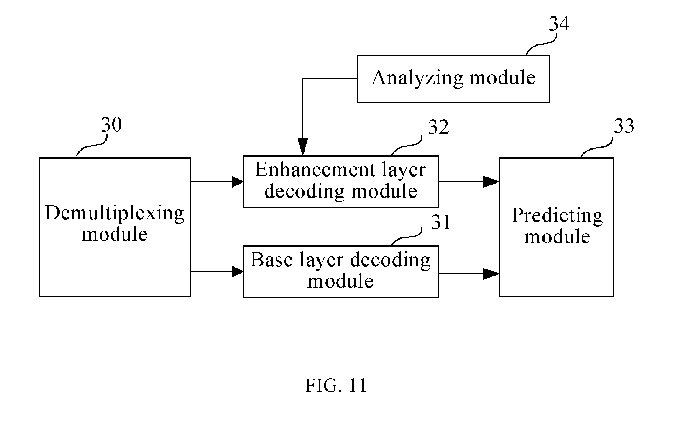

FIG. 11 shows a structure of a video decoder according to a first embodiment of the present invention. The video decoder includes:
   a demultiplexing module 30, adapted to demultiplex received encoded information to obtain the base-layer codes and the enhancement-layer codes;
   a base layer decoding module 31, adapted to decode the base-layer codes to obtain a first view as a reference view;
   an enhancement layer decoding module 32, adapted to decode the enhancement-layer codes to obtain prediction information of at least one layer; and
   a predicting module 33, adapted to predict a right-eye view according to the prediction information of at least one layer and the first view.

The video decoder in this embodiment may further include an analyzing module 34, which is adapted to analyze the request information from the display device, and obtain at least one 3D view display level required by the display device. The enhancement layer decoding module 32 obtains prediction information of at least one layer corresponding to at least one 3D view display level.

The decoder provided in this embodiment is applicable to embodiments 1-4 of a video decoding method provided herein.

In this embodiment, an enhancement layer decoding module 32 is set, and prediction information of at least one layer is obtained. Hence, the 3D views are decoded hierarchically, and various 3D display devices can display the 3D views hierarchically. In addition, the specific requirements of the display device may be obtained according to the analyzing module 24, and the corresponding level of prediction information is decoded, thus improving the decoding efficiency and reducing the decoding complexity.

The first embodiment of another video coding method is described below:

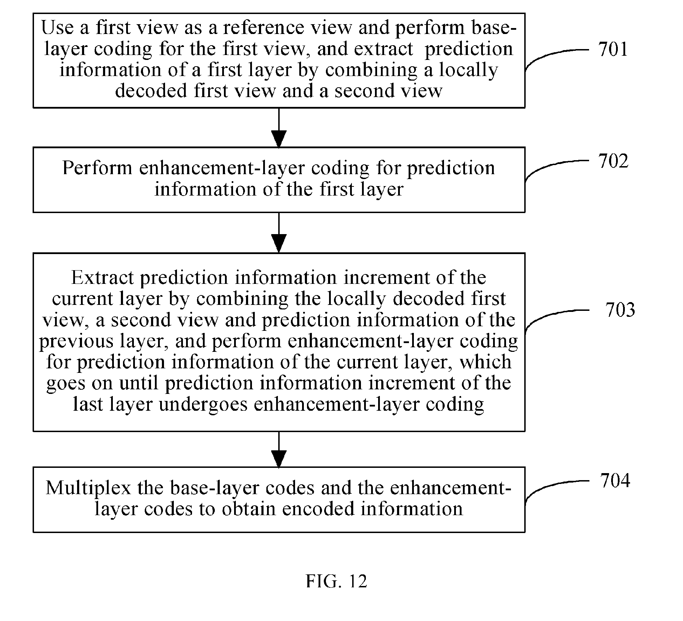

FIG. 12 is a flowchart of another video coding method according to a first embodiment of the present invention. The method includes the following steps:
   Step 701: Use a first view as a reference view and perform base-layer coding for the first view, and extract prediction information of a first layer by combining a locally decoded first view and a second view.
   Step 702: Perform enhancement-layer coding for prediction information of the first layer.
   Step 703: Extract prediction information increment of the current layer in the following way, which begins with extraction of prediction information increment of the second layer:
      extract prediction information increment of the current layer by combining the locally decoded first view, a second view, and the previous layer of prediction information, and perform enhancement-layer coding for prediction information of the current layer, which goes on until prediction information increment of the last layer undergoes enhancement-layer coding.
   Step 704: Multiplex the base-layer codes and the enhancement-layer codes to obtain encoded information.

Through the video coding method in this embodiment, prediction information of one layer and depth/disparity information increment of at least one layer are extracted and undergo enhancement-layer coding respectively. Therefore, the 3D views are encoded hierarchically, and various 3D display devices connected in different networks can display the 3D views hierarchically. Because depth/disparity information increment of at least one layer undergoes enhancement-layer coding, this method is superior to the practice of performing enhancement-layer coding for the prediction information directly in that less information needs to be transmitted in the network, the required network transmission bandwidth is decreased, and the transmission efficiency is improved.

The second embodiment of another video coding method is described below:

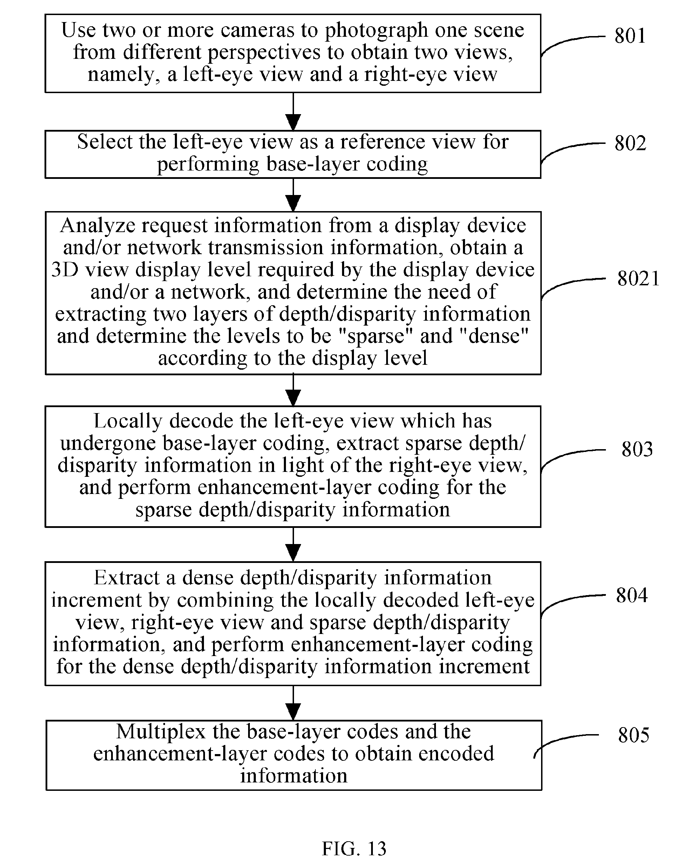

FIG. 13 is a flowchart of another video coding method according to a second embodiment of the present invention. In this embodiment, depth/disparity information is used as prediction information to extract a layer of depth/disparity information and a layer of depth/disparity information increment, namely, sparse depth/disparity information and dense depth/disparity information increment respectively. This embodiment includes the following steps:
   Step 801: Photograph one scene using two or more cameras from different perspectives to obtain two views, namely, a left-eye view and a right-eye view.
   Step 802: Select either the left-eye view or the right-eye view as a reference view, and perform base-layer coding for the reference view. In this embodiment, it is assumed that the left-eye view is selected as a reference view.
   Step 803: Locally decode the left-eye view which has undergone base-layer coding, extract sparse depth/disparity information in light of the right-eye view, and perform enhancement-layer coding for the sparse depth/disparity information.
   Step 804: Extract a dense depth/disparity information increment by combining the locally decoded left-eye view, right-eye view, and sparse depth/disparity information, and perform enhancement-layer coding for the dense depth/disparity information increment.
   Specifically, step 804 may be: extracting dense depth/disparity information by combining the locally decoded left-eye view and right-eye view, and calculating the increment of the dense depth/disparity information relative to the sparse depth/disparity information, namely, a dense depth/disparity information increment.
   Step 805: Multiplex the base-layer codes and the enhancement-layer codes to obtain encoded information.

In this embodiment, the sparse depth/disparity information and the dense depth/disparity information correspond to the pre-obtained two 3D view display levels. The pre-obtained two 3D view display levels may be determined according to the preset number of layers and the level of the depth/disparity information to be extracted, or may be determined according to the following step added before step 803:
Step 8021: Analyze the request information and/or network transmission information of the display device. If the analysis result indicates that the display device has a relatively high resolution, the required layer of displaying the 3D view is relatively high, and the dense depth/disparity information needs to be extracted; if the analysis result indicates that few contents can be transmitted when the network is relatively congested, the required layer of displaying the 3D view is relatively low, and the sparse depth/disparity information needs to be extracted. Taking such two factors into consideration, the 3D view display level required by the display devices and/or the networks is obtained, and the total number of layers and the level of the depth/disparity information to be extracted are determined according to the display level. For example, if the display level requires extraction of two layers of depth/disparity information, the layers are determined as "sparse depth/disparity information" and "dense depth/disparity information".

In the video coding method in this embodiment, the prediction information may be motion vector information, or combination of the depth/disparity information and the motion vector information, and the base-layer codes and the enhancement-layer codes may be discrete cosine transformation codes with motion compensation. The prediction information of two layers in this embodiment may be combination of any two of these items: sparse prediction information, dense prediction information, and fine prediction information.

In the video coding method in this embodiment, a layer of depth/disparity information and a layer of depth/disparity information increment are extracted and undergo enhancement-layer coding respectively. Thus, the 3D views are encoded hierarchically, and various 3D display devices connected in different networks can display the 3D views hierarchically. Because a layer of depth/disparity information increment undergoes enhancement-layer coding, less information needs to be transmitted in the network, the required network transmission bandwidth is decreased, and the transmission efficiency is improved. In addition, the corresponding layers and level of depth/disparity information may be extracted according to the requirements of the display device and the network conditions, thus improving the coding efficiency, reducing the coding complexity, and further improving the network transmission efficiency. This embodiment multiplexes the base-layer codes, and is compatible with the 2D display function because 2D views can be displayed according to the base-layer codes.

The third embodiment of another video coding method is described below:

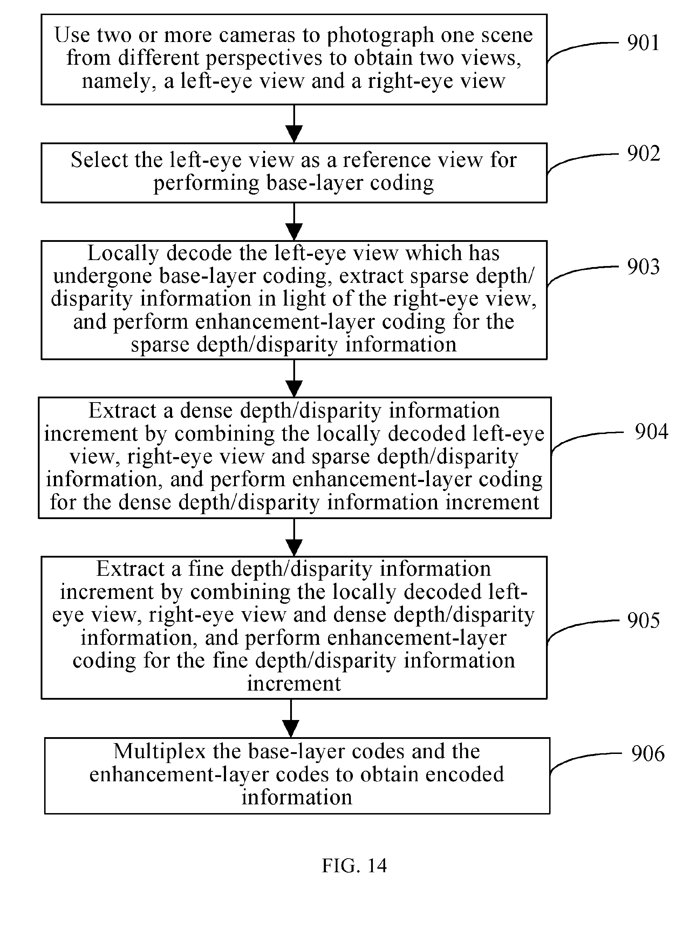

FIG. 14 is a flowchart of another video coding method according to a third embodiment of the present invention. This embodiment uses the depth/disparity information as prediction information. Before the steps in FIG. 14 are performed, the number of layers and the level of the depth/disparity information to be extracted may be preset. In this embodiment, it is assumed that depth/disparity information of three layers needs to be extracted: sparse depth/disparity information, dense depth/disparity information, and fine depth/disparity information. The technical solution in this embodiment is detailed below. The video coding method in this embodiment includes the following steps:
   Step 901: Photograph one scene using two or more cameras from different perspectives to obtain two views, namely, a left-eye view and a right-eye view.
   Step 902: Select either the left-eye view or the right-eye view as a reference view, and perform base-layer coding for the reference view. In this embodiment, it is assumed that the left-eye view is selected as a reference view.
   Step 903: Locally decode the left-eye view which has undergone base-layer coding, extract sparse depth/disparity information in light of the right-eye view, and perform enhancement-layer coding for the sparse depth/disparity information.
   Step 904: Extract a dense depth/disparity information increment by combining the locally decoded left-eye view, right-eye view, and sparse depth/disparity information, and perform enhancement-layer coding for the dense depth/disparity information increment.
   Step 905: Extract a fine depth/disparity information increment by combining the locally decoded left-eye view, right-eye view, and dense depth/disparity information, and perform enhancement-layer coding for the fine depth/disparity information increment.
   Step 906: Multiplex the base-layer codes and the enhancement-layer codes to obtain encoded information.

Specifically, step 904 may be: extracting dense depth/disparity information by combining the locally decoded left-eye view and right-eye view, and calculating the increment of the dense depth/disparity information relative to the sparse depth/disparity information, namely, a dense depth/disparity information increment. It is the same with step 905.

In the video coding method in this embodiment, the prediction information may be motion vector information, or combination of the depth/disparity information and the motion vector information, and the base-layer codes and the enhancement-layer codes may be discrete cosine transformation codes with motion compensation.

The coding method in this embodiment is not limited to extraction of prediction information of three layers. According to the determined total number of layers and determined layer of the prediction information to be extracted, prediction information of one layer and prediction information of at least one layer increment may be extracted.

Through the video coding method in this embodiment, a layer of depth/disparity information and several layers of depth/disparity information increments are extracted and undergo enhancement-layer coding respectively. Therefore, the 3D views are encoded hierarchically, and various 3D display devices connected in different networks can display the 3D views hierarchically. Because enhancement-layer coding is performed for several layers of depth/disparity information increments, less information needs to be transmitted in the network, the required network transmission bandwidth is reduced, and the transmission efficiency is improved. This embodiment also multiplexes the base-layer codes, and is compatible with the 2D display function because the 2D views can be displayed according to the base-layer codes.

The fourth embodiment of another video coding method is described below:

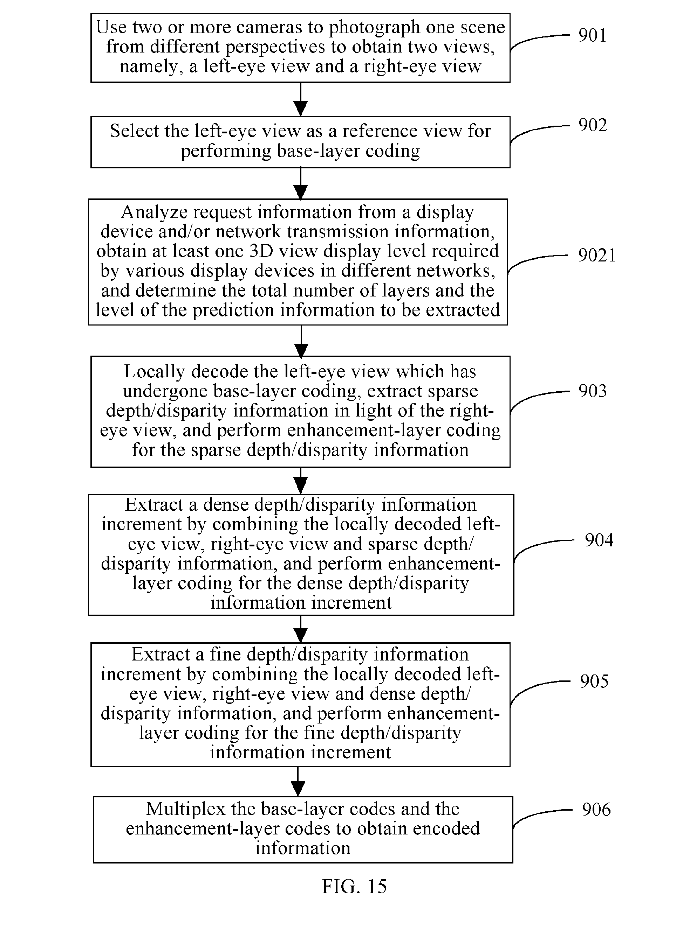

FIG. 15 is a flowchart of another video coding method according to a fourth embodiment of the present invention. This embodiment differs from the third embodiment of another video coding method in that: It is not necessary to preset the number of layers and the level of the extracted depth/disparity information before step 901, but the following step may be added before step 903:
   Step 9021: Analyze the request information and/or network transmission information of the display device. If the analysis result indicates that the display device has a relatively high resolution, the required layer of displaying the 3D view is relatively high, and the fine depth/disparity information needs to be extracted; if the analysis result indicates that few contents can be transmitted when the network is relatively congested, the required layer of displaying the 3D view is relatively low, and the sparse depth/disparity information needs to be extracted. Taking such two factors into consideration, the 3D view display level required by the display devices and/or the networks is obtained, and the total number of layers and the level of the depth/disparity information to be extracted are determined according to the display level. For example, if the display level requires extraction of depth/disparity information of three layers, the layers are determined as "sparse depth/disparity information", "dense depth/disparity information", and "fine depth/disparity information", and steps 903-906 need to be performed after step 9021.

On the basis of the third embodiment of another video coding method above, this embodiment further extracts the corresponding layers and level of depth/disparity information according to the requirements of the display device and the network conditions, thus improving the coding efficiency, reducing the coding complexity, and improving the network transmission efficiency.

The first embodiment of another video coder is described below:

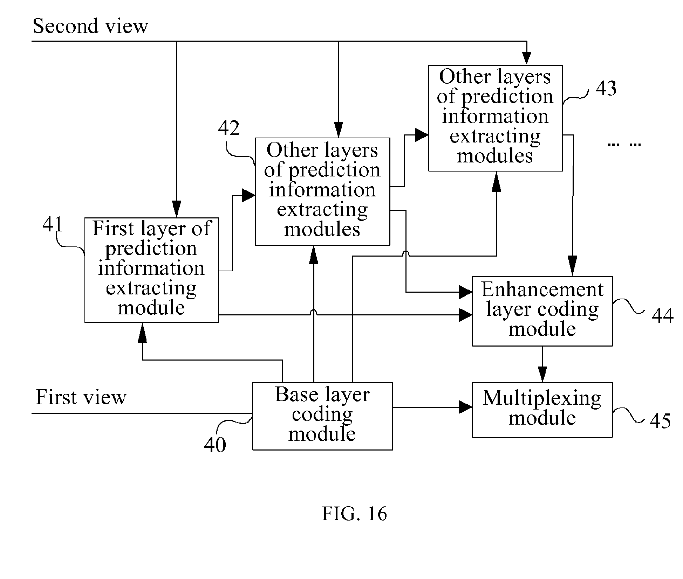

FIG. 16 shows a structure of another video coder according to a first embodiment of the present invention. The video coder includes:
   a base layer coding module 40, adapted to use a first view as a reference view and perform base-layer coding for the first view;
   prediction information of at least two layers extracting modules, where: prediction information of the first layer extracting module 41 is connected with the base layer coding module 40 and adapted to extract prediction information of the first layer by combining the locally decoded first view and a second view; other layers of prediction information extracting modules 42, 43... except prediction information of the first layer extracting module 41 are connected with the previous layer of prediction information extracting module and adapted to extract prediction information increment of the current layer by combining the locally decoded first view, the second view, and the previous layer of prediction information;
   an enhancement layer coding module 44, adapted to perform enhancement-layer coding for prediction information of the first layer and prediction information increments of several layers; and
   a multiplexing module 45, adapted to multiplex the base-layer codes and the enhancement-layer codes to obtain encoded information.

The coder provided in this embodiment is applicable to embodiments 1-4 of another video coding method provided herein.

In this embodiment, prediction information of the first layer extracting module 41 and other layers of prediction information extracting modules 42, 43... extract prediction information of one layer and depth/disparity information increment of at least one layer, and perform enhancement-layer coding for them respectively. Therefore, the 3D views are encoded hierarchically, and various 3D display devices connected in different networks can display the 3D views hierarchically. Because enhancement-layer coding is performed for the increment, less information needs to be transmitted in the network, the required network transmission bandwidth is decreased, and the transmission efficiency is improved.

The second embodiment of another video coder is described below:

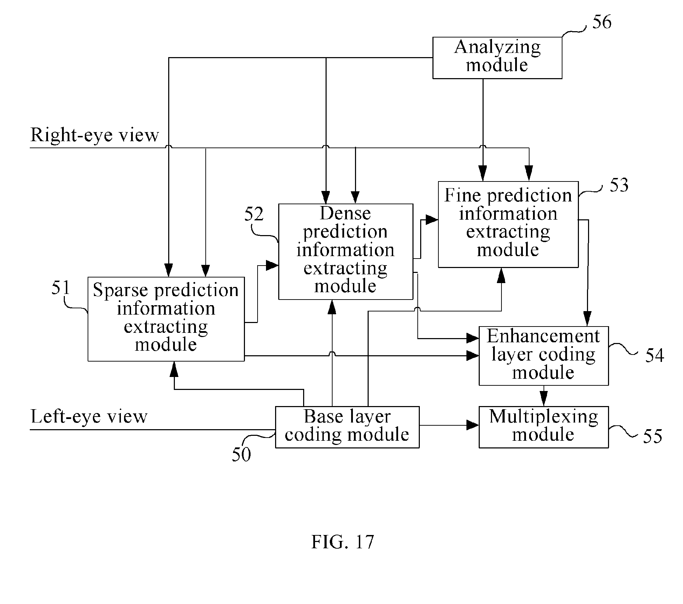

FIG. 17 shows a structure of another video coder according to a second embodiment of the present invention. The video coder includes:
   a base layer coding module 50, adapted to perform base-layer coding for the left-eye view;
   a sparse prediction information extracting module 51, connected with the base layer coding module 50 and adapted to extract sparse prediction information by combining the right-eye view and the locally decoded left-eye view;
   a dense prediction information extracting module 52, connected with the sparse prediction information extracting module 51 and adapted to receive the sparse prediction information sent by the sparse prediction information extracting module 51, and extract a dense prediction information increment by combining the right-eye view and the locally decoded left-eye view;
   a fine prediction information extracting module 53, connected with the dense prediction information extracting module 52 and adapted to receive the dense prediction information sent by the dense prediction information extracting module 52, and extract a fine prediction information increment by combining the right-eye view and the locally decoded left-eye view;
   an enhancement layer coding module 54, adapted to perform enhancement-layer coding for the sparse prediction information, dense prediction information increment, and fine prediction information increment respectively; and
   a multiplexing module 55, adapted to multiplex the base-layer codes and the enhancement-layer codes to obtain encoded information.

The video coder in this embodiment may further include an analyzing module 56, which is adapted to analyze the request information from the display device and/or the network transmission information, obtain the 3D view display level required by the display device and/or the network, and determine the total number of layers and the level of the prediction information increment to be extracted according to the display level.

The video coder in this embodiment is not limited to the foregoing prediction information of three layers extracting modules. Depending on the actual needs, for example, as required by the display device and/or the network, prediction information of at least two layers extracting modules are set to meet the requirements of different display devices and/or networks.

In this embodiment, a sparse prediction information extracting module 51, a dense prediction information extracting module 52, and a fine prediction information extracting module 53 are set to extract sparse prediction information, a dense prediction information increment, and a fine prediction information increment, and perform enhancement-layer coding for them respectively. Therefore, the 3D views are encoded hierarchically, and various 3D display devices connected in different networks can display the 3D views hierarchically. Because enhancement-layer coding is performed for the dense prediction information increment and the fine prediction information increment, less information needs to be transmitted in the network, the required network transmission bandwidth is reduced, and the transmission efficiency is improved. In addition, the specific requirements of the display device and the network conditions may be obtained according to the analyzing module 56, and the corresponding layers and level of prediction information are extracted, thus improving the coding efficiency, reducing the coding complexity, and further improving the network transmission efficiency.

The first embodiment of another video decoding method is described below:

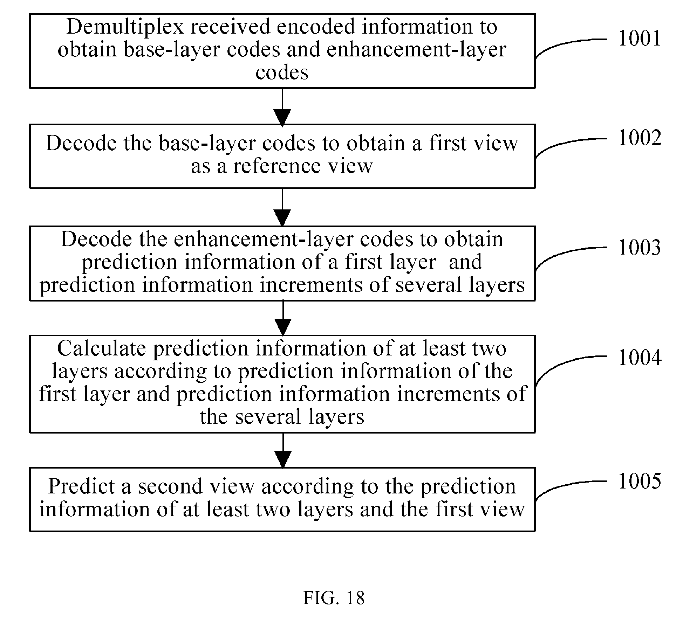

FIG. 18 is a flowchart of another video decoding method according to a first embodiment of the present invention. The video decoding method in this embodiment is pertinent to another video coding method in the first embodiment of the present invention, and includes the following steps:
   Step 1001: Demultiplex received encoded information to obtain the base-layer codes and the enhancement-layer codes.
   Step 1002: Decode the base-layer codes to obtain a first view as a reference view. Step 1003: Decode the enhancement-layer codes to obtain prediction information of a first layer and prediction information increments of several layers.
   Step 1004: Calculate at least prediction information of two layers according to prediction information of the first layer and the prediction information increments of several layers.
   Step 1005: Predict a second view according to prediction information of the at least two layers and the first view.

Through the video decoding method in this embodiment, at least prediction information of two layers is calculated according to the obtained first layer of prediction information and prediction information increments of several layers. Therefore, the 3D views are decoded hierarchically, and various 3D display devices can display the 3D views hierarchically. Because enhancement-layer decoding is performed for prediction information increments of several layers, less information needs to be transmitted in the network, the required network transmission bandwidth is reduced, and the transmission efficiency is improved. This embodiment also decodes the base-layer codes, and is compatible with the 2D display function because the 2D views can be displayed according to the decoded information of the base-layer codes.

The second embodiment of another video decoding method is described below:

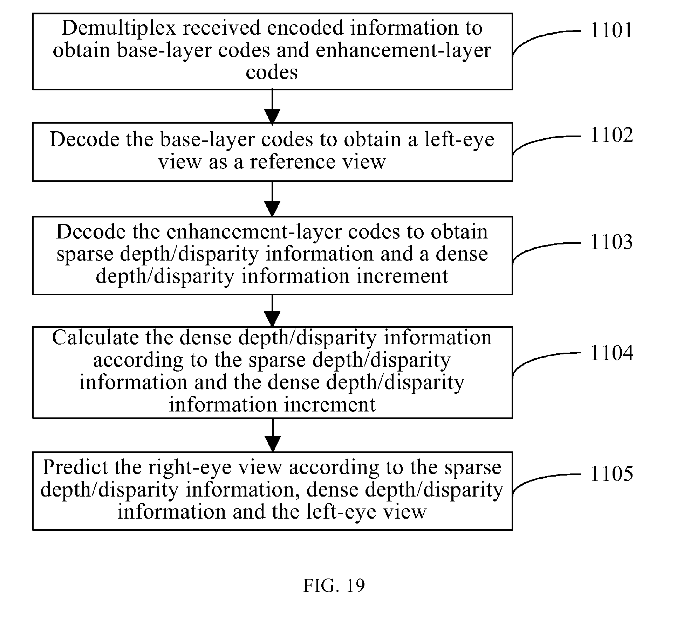

FIG. 19 is a flowchart of another video decoding method according to a second embodiment of the present invention. The video decoding method in this embodiment is pertinent to another video coding method in the second embodiment of the present invention, and includes the following steps:
   Step 1101: Demultiplex received encoded information to obtain the base-layer codes and the enhancement-layer codes.
   Step 1102: Decode the base-layer codes to obtain a left-eye view as a reference view.
   Step 1103: Decode the enhancement-layer codes to obtain sparse depth/disparity information and a dense depth/disparity information increment.
   Step 1104: Calculate the dense depth/disparity information according to the sparse depth/disparity information and the dense depth/disparity information increment.
   Step 1105: Predict the right-eye view according to the sparse depth/disparity information, dense depth/disparity information and the left-eye view.

Through the video decoding method in this embodiment, prediction information of two layers is calculated according to the obtained sparse prediction information and dense prediction information increment. Therefore, the 3D views are decoded hierarchically, and various 3D display devices can display the 3D views hierarchically. Because enhancement-layer decoding is performed for the dense prediction information increment, less information needs to be transmitted in the network, the required network transmission bandwidth is reduced, and the transmission efficiency is improved. This embodiment also decodes the base-layer codes, and is compatible with the 2D display function because the 2D views can be displayed according to the decoded information of the base-layer codes.

The third embodiment of another video decoding method is described below:

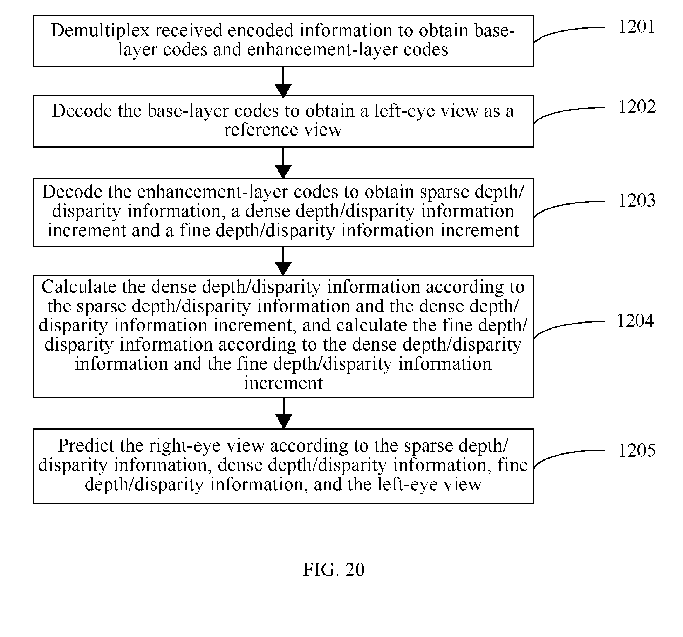

FIG. 20 is a flowchart of another video decoding method according to a third embodiment of the present invention. The video decoding method in this embodiment is pertinent to another video coding method in the fourth embodiment of the present invention, and includes the following steps:
   Step 1201: Demultiplex received encoded information to obtain the base-layer codes and the enhancement-layer codes.
   Step 1202: Decode the base-layer codes to obtain a left-eye view as a reference view.
   Step 1203: Decode the enhancement-layer codes to obtain sparse depth/disparity information, a dense depth/disparity information increment and a fine depth/disparity information increment.
   Step 1204: Calculate the dense depth/disparity information according to the sparse depth/disparity information and the dense depth/disparity information increment, and calculate the fine depth/disparity information according to the dense depth/disparity information and the fine depth/disparity information increment.
   Step 1205: Predict the right-eye view according to the sparse depth/disparity information, dense depth/disparity information, fine depth/disparity information, and left-eye view.

In the coding process, at least one 3D view display level is obtained by analyzing the display device and/or network transmission information, and a three-layer prediction information structure corresponding to the display level is obtained according to the display level, where the prediction information of three layers are sparse depth/disparity information, dense depth/disparity information, and fine depth/disparity information. Therefore, in the decoding process, the enhancement-layer codes are decoded directly to obtain the depth/disparity information of three layers.

In the video decoding method in this embodiment, the prediction information may be motion vector information, or combination of the depth/disparity information and the motion vector information.

Through the video decoding method in this embodiment, at least two layers of depth/disparity information are calculated according to the obtained first layer of depth/disparity information and several layers of depth/disparity information increments. Therefore, the 3D views are decoded hierarchically. The right-eye view is predicted in light of the left-eye view, the 3D views can be displayed according to the left-eye view and the predicted right-eye view, and various 3D display devices can display the 3D views hierarchically. Because enhancement-layer decoding is performed for several layers of depth/disparity information increments, less information needs to be transmitted in the network, the required network transmission bandwidth is reduced, and the transmission efficiency is improved. This embodiment also decodes the base-layer codes, and is compatible with the 2D display function because the 2D views can be displayed according to the decoded information of the base-layer codes.

The fourth embodiment of another video decoding method is described below:

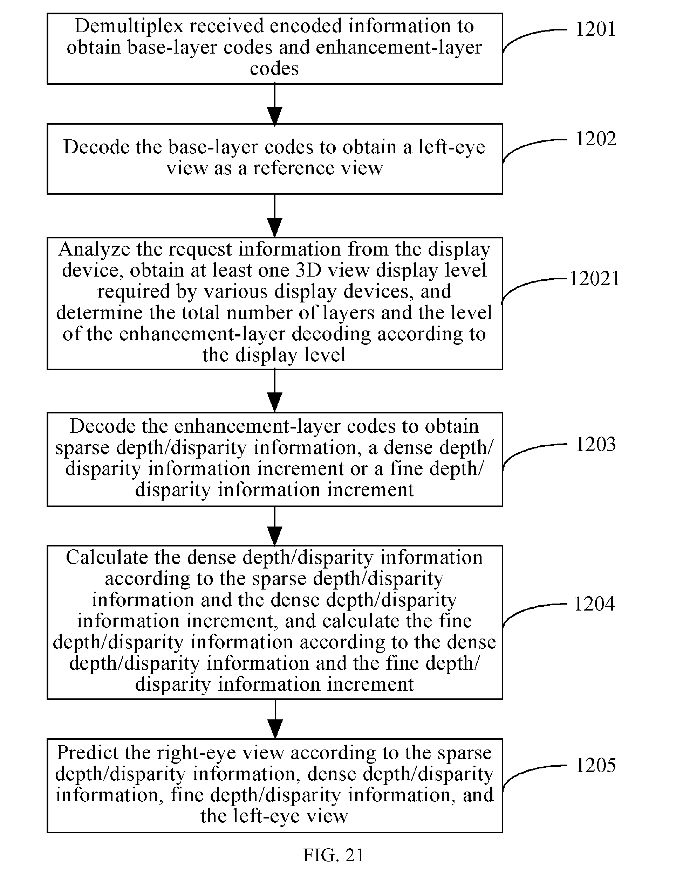

FIG. 21 is a flowchart of another video decoding method according to a fourth embodiment of the present invention. The video decoding method in this embodiment is pertinent to another video coding method in the third embodiment of the present invention, and differs from the third embodiment of another video decoding method in the following aspects:
   In the coding process, the three-layer prediction information structure is determined according to the preset number of layers and the level of the prediction information to be extracted. Accordingly, the decoding process may further include the following step before step 1203:
   Step 12021: Analyze the request information from the display device, obtain at least one 3D view display level required by various display devices, and determine the total number of layers and the level of the enhancement-layer decoding according to the display level.

Specifically, step 1203 is: decoding the enhancement-layer codes according to the determined total number of layers and determined level of the enhancement-layer codes, and obtaining the sparse depth/disparity information and depth/disparity information increment of at least one layer. The depth/disparity information increment of at least one layer may be a dense depth/disparity information increment, or may be a combination of a dense depth/disparity information increment and a fine depth/disparity information increment.

On the basis of the third embodiment of another video decoding method, this embodiment further decodes the corresponding layers and level of enhancement-layer codes according to the specific requirements of the display device, and obtains the corresponding level of depth/disparity information, thus improving the decoding efficiency and reducing the decoding complexity.

The first embodiment of another video decoder is described below:

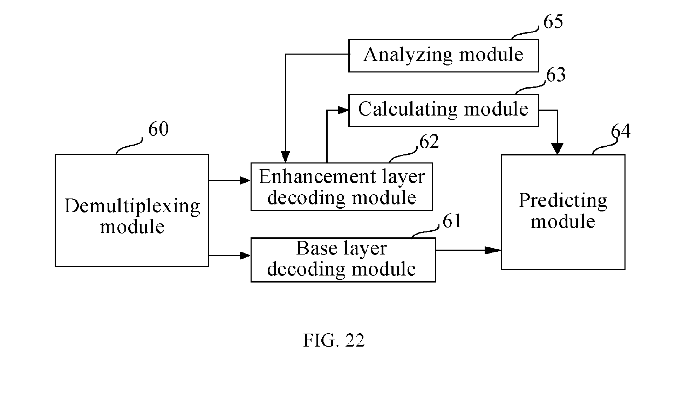

FIG. 22 shows a structure of another video decoder according to a first embodiment of the present invention. The video decoder includes:
   a demultiplexing module 60, adapted to demultiplex received encoded information to obtain the base-layer codes and the enhancement-layer codes;
   a base layer decoding module 61, adapted to decode the base-layer codes to obtain a first view as a reference view;
   an enhancement layer decoding module 62, adapted to decode the enhancement-layer codes to obtain prediction information of a first layer and prediction information increments of several layers;
   a calculating module 63, adapted to calculate at least prediction information of two layers according to prediction information of the first layer and the prediction information increments of several layers; and
   a predicting module 64, adapted to predict a second view according to prediction information of the at least two layers and the first view.

The video decoder in this embodiment may further include an analyzing module 65, which is adapted to analyze the request information from the display device, obtain a 3D view display level required by the display device, and determine the total number of layers of the enhancement-layer decoding according to the display level.

The decoder provided in this embodiment is applicable to embodiments 1-4 of another video decoding method provided herein.

In this embodiment, an enhancement layer decoding module 62 and a calculating module 63 are set to obtain prediction information of at least two layers. Therefore, the 3D views are decoded hierarchically, and various 3D display devices can display the 3D views hierarchically. Because enhancement-layer decoding is performed for prediction information increments of several layers, less information needs to be transmitted in the network, the required network transmission bandwidth is reduced, and the transmission efficiency is improved. This embodiment also obtains the specific requirements of the display device according to the analyzing module 65, and decodes the corresponding layers and level of prediction information, thus improving the decoding efficiency and reducing the decoding complexity.

Finally, it should be noted that the above embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the scope of the present invention.

## Claims

1. A video coding method, comprising:
using a first view as a reference view and performing base-layer coding for the first view, and extracting at least one layer of prediction information by combining a locally decoded first view and a second view;
performing enhancement-layer coding for the at least one layer of prediction information respectively; and
multiplexing enhancement-layer codes and base-layer codes of the first view to obtain encoded information.

2. The video coding method of claim 1, wherein:
the prediction information is motion vector information and/or depth/disparity information.

3. The video coding method of claim 1, wherein:
the base-layer codes and the enhancement-layer codes are discrete cosine transformation codes with motion compensation.

4. The video coding method according to any one of claims 1-3, wherein
before using the first view as the reference view and performing the base-layer coding for the first view, the method further comprises: analyzing request information from a display device and/or network transmission information, and obtaining at least one three-dimensional (3D) view display level required by the display device and/or a network; and
the extracting of the at least one layer of prediction information by combining the locally decoded first view and the second view is: extracting at least one layer of prediction information corresponding to the 3D view display level required by the display device and/or the network by combining the locally decoded first view and the second view.

5. A video coder, comprising:
a base layer coding module, adapted to use a first view as a reference view and perform base-layer coding for the first view;
at least one prediction information extracting module, adapted to extract at least one layer of prediction information by combining a locally decoded first view and a second view;
an enhancement layer coding module, adapted to perform enhancement-layer coding for the at least one layer of prediction information; and
a multiplexing module, adapted to multiplex enhancement-layer codes and base-layer codes of the first view to obtain encoded information.

6. The video coder of claim 5, further comprising:
an analyzing module, adapted to: analyze request information from a display device and/or network transmission information, and obtain at least one three-dimensional (3D) view display level required by the display device and/or a network.

7. A video decoding method, comprising:
demultiplexing received encoded information to obtain base-layer codes and enhancement-layer codes;
decoding the base-layer codes to obtain a first view as a reference view;
decoding the enhancement-layer codes to obtain at least one layer of prediction information;
and
predicting a second view according to the at least one layer of prediction information and the first view.

8. The video decoding method of claim 7, wherein:
the prediction information is motion vector information and/or depth/disparity information.

9. The video decoding method of claim 7 or claim 8, wherein:
before decoding the enhancement-layer codes, the method further comprises: analyzing request information from a display device, and obtaining at least one three-dimensional (3D) view display level required by the display device; and
the decoding of the enhancement-layer codes and obtaining of the at least one layer of prediction information is: decoding the enhancement-layer codes, and obtaining at least one layer of prediction information corresponding to the 3D display level required by the display device.

10. A video decoder, comprising:
a demultiplexing module, adapted to demultiplex received encoded information to obtain base-layer codes and enhancement-layer codes;
a base layer decoding module, adapted to decode the base-layer codes to obtain a first view as a reference view;
an enhancement layer decoding module, adapted to decode the enhancement-layer codes to obtain at least one layer of prediction information; and
a predicting module, adapted to predict a second view according to the at least one layer of prediction information and the first view.

11. The video decoder of claim 10, further comprising:
an analyzing module, adapted to analyze request information from a display device, and obtain at least one three-dimensional (3D) view display level required by the display device.

12. A video coding method, comprising:
using a first view as a reference view and performing base-layer coding for the first view, and extracting a first layer of prediction information by combining a locally decoded first view and a second view;
performing enhancement-layer coding for the first layer of prediction information; and
extracting a current layer of prediction information increment in the following way, which begins with extraction of a second layer of prediction information increment:
extracting the current layer of prediction information increment by combining the locally decoded first view, the second view, and a previous layer of prediction information, and performing the enhancement-layer coding for the current layer of prediction information increment, which goes on until a last layer of prediction information increment undergoes the enhancement-layer coding; and
multiplexing base-layer codes and enhancement-layer codes to obtain encoded information.

13. The video coding method of claim 12, wherein the extracting of the current layer of prediction information increment by combining the locally decoded first view, the second view, and the previous layer of prediction information is:
extracting a current layer of prediction information by combining the locally decoded first view and the second view; and
calculating the current layer of prediction information increment according to the current layer of prediction information and the previous layer of prediction information.

14. The video coding method of claim 13, wherein the extracting of the current layer of prediction information increment is:
extracting a current layer of motion vector information increment and/or a current layer of depth/disparity information increment.

15. The video coding method of claim 14, wherein:
the base-layer codes and the enhancement-layer codes are discrete cosine transformation codes with motion compensation.

16. The video coding method according to any one of claims 12-15, wherein before performing the enhancement-layer coding for the first layer of prediction information, the method further comprises:
analyzing request information from a display device and/or network transmission information, obtaining a three-dimensional (3D) view display level required by the display device and/or a network, and determining a total number of layers and a level of the prediction information increment to be extracted according to the display level.

17. A video coder, comprising:
a base layer coding module, adapted to use a first view as a reference view and perform base-layer coding for the first view;
at least two layers of prediction information extracting modules, wherein: a first layer of prediction information extracting module is connected with the base layer coding module and adapted to extract a first layer of prediction information by combining a locally decoded first view and a second view; other layers of prediction information extracting modules except the first layer of prediction information extracting module are connected with a previous layer of prediction information extracting module and adapted to extract a current layer of prediction information increment by combining the locally decoded first view, the second view, and a previous layer of prediction information;
an enhancement layer coding module, adapted to perform enhancement-layer coding for the first layer of prediction information and several layers of prediction information increments; and
a multiplexing module, adapted to multiplex base-layer codes and enhancement-layer codes to obtain encoded information.

18. The video coder of claim 17, further comprising:
an analyzing module, adapted to: analyze request information from a display device and/or network transmission information, obtain a three-dimensional (3D) view display level required by the display device and/or a network, and determine a total number of layers and a level of the prediction information increment to be extracted according to the display level.

19. A video decoding method, comprising:
demultiplexing received encoded information to obtain base-layer codes and enhancement-layer codes;
decoding the base-layer codes to obtain a first view as a reference view;
decoding the enhancement-layer codes to obtain a first layer of prediction information and several layers of prediction information increments;
calculating at least two layers of prediction information according to the first layer of prediction information and the several layers of prediction information increments; and
predicting a second view according to the at least two layers of prediction information and the first view.

20. The video decoding method of claim 19, wherein the obtaining of the first layer of prediction information and the several layers of prediction information increments is:
obtaining a first layer of motion vector information and/or a first layer of depth/disparity information as well as several layers of motion vector information increments and/or several layers of depth/disparity information increments.

21. The video decoding method of claim 19 or claim 20, wherein before decoding the enhancement-layer codes, the method further comprises:
analyzing request information from a display device, obtaining a three-dimensional (3D) view display level required by the display device, and determining a total number of layers and a level of enhancement-layer decoding according to the display level.

22. A video decoder, comprising:
a demultiplexing module, adapted to demultiplex received encoded information to obtain base-layer codes and enhancement-layer codes;
a base layer decoding module, adapted to decode the base-layer codes to obtain a first view as a reference view;
an enhancement layer decoding module, adapted to decode the enhancement-layer codes to obtain a first layer of prediction information and several layers of prediction information increments;
a calculating module, adapted to calculate at least two layers of prediction information according to the first layer of prediction information and the several layers of prediction information increments; and
a predicting module, adapted to predict a second view according to the at least two layers of prediction information and the first view.

23. The video decoder of claim 22, further comprising:
an analyzing module, adapted to: analyze request information from a display device, obtain a three-dimensional (3D) view display level required by the display device, and determine a total number of layers and a level of enhancement-layer decoding according to the display level.
